# EUROPEAN PATENT APPLICATION

(11) **EP 1 350 974 A1**
(43) Date of publication of application: **08.10.2003**
(21) Application number: 03252130.4
(22) Date of filing: 03.04.2003
(51) Int. Cl.: F16D 3/38, F16D 1/064

(54) **Vehicle driveshaft assembly**

(30) Priority: 03.04.2002 US 369830 P
(71) Applicant: DANA CORPORATION, Toledo, OH 43606 (US)
(72) Inventor: Marando, Richard A., Mohrsville, Pennsylvania 19541 (US); Shaw, David J., Reading, Pennsylvania 19605 (US)
(74) Representative: Giles, Ashley Simon

(57) **Abstract**

A driveshaft assembly includes a driveshaft tube (12) including an end (14) having a pair of axially extending arms (16) formed integrally therewith and a journal cross carrier (20) having axially extending arms (22) engaging the arms extending from the end of the driveshaft tube. The journal cross carrier has a cup-shaped (28) portion integral therewith. The cup-shaped portion extends within the driveshaft tube. The first and second arms of said journal cross carrier arms respectively engage the first and second arms of the driveshaft tube.

## Description

### BACKGROUND OF THE INVENTION

This invention relates to a vehicle driveshaft assembly. More specifically, this invention relates to a driveshaft assembly comprising a pair of opposing arms formed integrally with a driveshaft tube and a journal cross carrier having opposing arms for reinforcing respective arms of the driveshaft tube. The journal cross carrier has a plug formed integrally therewith for sealing the driveshaft tube to prevent dirt, water, and other contaminants from entering within the driveshaft tube.

In most land vehicles in use today, a driveshaft assembly is provided for transmitting rotational power from an output shaft of a transmission to an input shaft of an axle assembly so as to rotatably drive one or more wheels of the vehicle. To accomplish this, a typical vehicular driveshaft assembly includes a hollow cylindrical driveshaft tube. A first universal joint is connected between the output shaft of the transmission and a first end of the driveshaft tube, while a second universal joint is connected between a second end of the driveshaft tube and the input shaft of the axle assembly. The universal joints provide a rotational driving connection from the output shaft of the transmission through the driveshaft tube to the input shaft of the axle assembly, while accommodating a limited amount of angular misalignment between the rotational axes of these three shafts.

A typical universal joint includes a journal cross having a central body portion with four cylindrical trunnions extending outwardly therefrom. The trunnions are oriented in a single plane and extend at right angles relative to one another. A hollow cylindrical bearing cup having a cylindrical outer wall and a circular end wall is mounted on the end of each of the trunnions. A bearing structure, such as a plurality of needle bearings or roller bearings, is provided between the trunnion and the associated bearing cup to facilitate relative rotational movement therebetween. The bearing cups that are mounted on a first opposed pair of the trunnions can be connected to a first yoke secured to a first component of the drive train assembly, while the bearing cups mounted on a second opposed pair of the trunnions can be connected to a second yoke secured to a second component of the drive train assembly.

Traditionally, the ends of the driveshaft tube are connected to the universal joints by respective tube yokes. A typical tube yoke includes a sleeve portion that is sized to be press fit within the end of the driveshaft tube. The sleeve portion of the tube yoke is usually permanently secured to the end of the driveshaft tube, such as by welding, adhesives, and the like. The tube yoke further includes a yoke portion having a pair of opposed arms extending therefrom. The opposed arms of the yoke portion are adapted to receive the opposed bearing cups provided on the universal joint cross in the manner described above.

A conventional tube yoke is typically formed from a highly machined forging. The forging process requires a significant amount of capital equipment. The dimensional quality of the forged tube yoke often requires the driveshaft assembly to be balanced, which increases manufacturing time and cost. Although the forged tube yoke has been in common use for many years, it would be desirable to provide an improved structure for a driveshaft assembly that is simpler and less expensive.

### SUMMARY OF THE INVENTION

This invention relates to an improved structure for a driveshaft assembly. The driveshaft assembly includes a driveshaft tube including an end having a pair of axially extending arms formed integrally therewith and a journal cross carrier having axially extending arms engaging the arms of the driveshaft tube. The journal cross carrier has a cup-shaped portion integral therewith. The cup-shaped portion extends within the driveshaft tube. The cup-shaped portion is provided for sealing the driveshaft tube to prevent dirt, water, and other contaminants from entering within the driveshaft tube. This invention also relates to a driveshaft assembly including a driveshaft tube having an enlarged end formed therein and a pair of opposing arms extending axially therefrom. The opposing arms have openings formed therethrough. The driveshaft tube further has an outer edge. A journal cross carrier is disposed about the outer edge of the driveshaft tube. The journal cross carrier is a hollow, generally U-shaped member having a pair of reinforcement arms. The reinforcement arms have openings formed therethrough. The openings in the reinforcement arms are adapted to align with the openings in the opposing arms of the driveshaft tube. The journal cross carrier has a cup-shaped portion integral therewith. The cup-shaped portion extends into the enlarged end of the driveshaft tube. Annular reinforcement members are received in the openings in the opposing arms of the driveshaft tube and the openings in the reinforcement arms of the journal cross carrier. The driveshaft assembly in accordance with the invention is not formed by a highly-machined forging. Consequently, it does not require a significant amount of capital equipment. Moreover, the driveshaft assembly is simpler and has a dimensional quality. As a result, the driveshaft assembly requires less manufacturing time and cost.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is an exploded perspective view of a driveshaft assembly in accordance with this invention.
Fig. 2 is a perspective view of the driveshaft assembly illustrated in Fig. 1 shown assembled.
Fig. 3 is an enlarged elevational view of the driveshaft assembly illustrated in Fig. 2.
Fig. 4 is sectional elevational view of the driveshaft assembly taken along the line 4-4 in Fig. 3.

### DETAILED DESCRIPTION OF THE PREFERRED EMBODIMENT

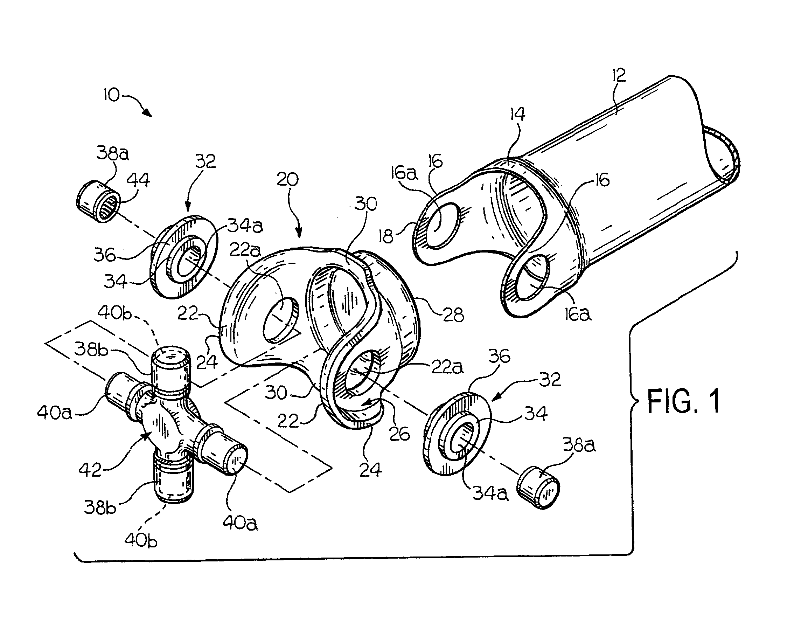

Referring now to the drawings, there is illustrated in Fig. 1 a portion of a driveshaft assembly, indicated generally at 10, in accordance with this invention that can be used, for example, in a vehicle drive train system. The driveshaft assembly 10 is formed in part by an enlarged end 14 of a driveshaft tube 12. In the illustrated embodiment, the enlarged end 14 of the driveshaft tube 12 is formed from a section of hollow cylindrical tubing. However, the enlarged end 14 of the driveshaft tube 12 may be formed having any desired shape. The enlarged end 14 of the driveshaft tube 12 can be formed by any known method, such as by hydroforming. A pair of opposing arms 16 extends axially from the enlarged end 14 of the driveshaft tube 12. In the illustrated embodiment, the opposing arms 16 are formed integrally with the enlarged end 14 of the driveshaft tube 12 (i.e., from a single piece of material). However, the opposing arms 16 may be formed from two or more pieces of material, such as two separate U-shaped stampings. Then, the enlarged end 14 of the driveshaft tube 12 and the opposing arms 16 can be secured together using conventional welding processes (laser or metal inert gas (MIG) welding, for example) or other techniques that are suited for joining components formed from similar materials. The opposing arms 16 of the driveshaft tube 12 have respective openings 16a formed therethrough for a purpose that will be explained below. A portion of the opposing arms 16 about the openings 16a is preferably substantially flat for a purpose that will also be explained below.

The driveshaft tube 12 also has an outer edge 18. As shown in the drawings, the outer edge 18 may be defined in part by the enlarged end 14 and in part by the perimeter of the opposing arms 16. A journal cross carrier, indicated generally at 20, is disposed about the outer edge 18 of the driveshaft tube 12. In the illustrated embodiment, the journal cross carrier 20 is a hollow, generally U-shaped member having a pair of reinforcement arms 22. The reinforcement arms 22 have respective peripheral lips 24 extending radially outward therefrom. The reinforcement arms 22 and the peripheral lips 24 cooperatively form respective recesses, indicated generally at 26, for receiving the opposing arms 16 of the driveshaft tube 12. The opposing arms 16 of the driveshaft tube 12 are adapted to extend respective into the recesses 26. The reinforcement arms 22 of the journal cross carrier 20 should provide desirable stiffness and rigidity to support the opposing arms 16 of the driveshaft tube 12. The reinforcement arms 22 have respective openings 22a formed therethrough for a purpose that will be explained below. A portion of the reinforcement arms 22 about the openings 22a in the reinforcement arms 22 is preferably substantially flat for a purpose that will also be explained below. The reinforcement arms 22 are shaped to conform to the shape of the opposing arms 16 of the driveshaft tube 12. Moreover, the openings 22a in the reinforcement arms 22 are adapted to align with the openings 16a in the opposing arms 16 of the driveshaft tube 12.

The journal cross carrier 20 has a closed, cup-shaped body portion 28 integral therewith. The reinforcement arms 22 of the journal cross carrier 20 extend axially from the cup-shaped portion 28. Opposing portions of the cup-shaped portion 28 have respective partial circumferential lips 30 that extend radially outward and between the peripheral lips 24 of the reinforcement arms 22 of the journal cross carrier 20. The cup-shaped portion 28 is adapted to extend within the enlarged end 14 of the driveshaft tube 12. The cup-shaped portion 28 is preferably sized to fit snugly within the enlarged end 14 of the driveshaft tube 12. Thus, a conventional press or other assembly tool may be employed to insert the cup-shaped portion 28 within the enlarged end 14 of the driveshaft tube 12. The cup-shaped portion 28 can be installed by moving the cup-shaped portion 28 axially within the enlarged end 14 of the driveshaft tube 12 until the partial circumferential lips 30 abut the portions of the outer edge 18 defined by the enlarged end 14. The cup-shaped portion 28 functions as a welch plug or other closure device to seal the interior of the driveshaft tube 12 to prevent dirt, water, and other contaminants from entering within the driveshaft tube 12. The cup-shaped portion 28 may also provide desirable stiffness and rigidity for the enlarged end 14 of the driveshaft tube 12.

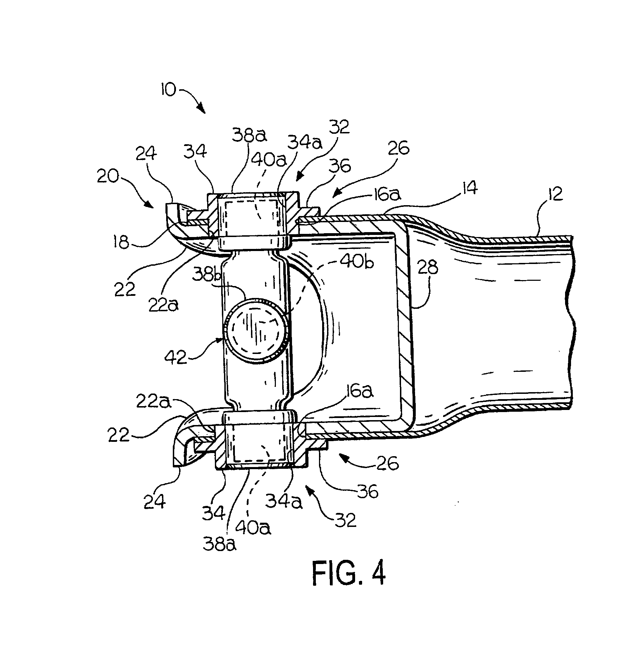

The opposing openings 16a through the opposing arms 16 of the driveshaft tube 12 and the openings 22a through the reinforcement arms 22 of the journal cross carrier 20 are adapted to receive respective annular reinforcement members, indicated generally at 32. The annular reinforcement members 32 each include a cylindrical sleeve 34 and a circular flange 36 extending radially from the cylindrical sleeve 34. The cylindrical sleeves 34 have an outer shape that corresponds generally to the inner shape of openings 16a and 22a. Thus, the cylindrical sleeves 34 are sized to be received snugly within the openings 16a and 22a as shown in Fig. 4. The annular reinforcement members 32 can be installed by moving the cylindrical sleeves 34 axially within respective openings 16a and 22a until the circular flanges 36 abut the substantially flat portion about the openings 16a of opposing arms 16 of the driveshaft tube 12. In the illustrated embodiment, the annular reinforcement members 32 can be received within the recesses 26 cooperatively formed by the reinforcement arms 22 and the peripheral lips 24.

An opening 34a is formed through the cylindrical sleeve 34 of each of the annular reinforcement members 32. The openings 34a are sized to snugly receive respective bearing cups 38a on opposed trunnions 40a of a universal joint journal cross, indicated generally at 42. The journal cross 42 can be a conventional cross having a central body portion with four cylindrical trunnions 40a and 40b extending outwardly therefrom. The trunnions 40a and 40b are oriented in a single plane and extend at right angles relative to one another. A first pair of bearing cups 38a is adapted to be mounted on the ends of a first opposed pair of the trunnions 40a. Each of the bearing cups 38a is generally hollow and cylindrical in shape, having a closed outer end wall. A bearing structure, such as a plurality of needle bearings or roller bearings 44, is provided between each of the trunnions 40a and the associated bearing cups 38a to facilitate relative rotational movement therebetween. A second pair of bearing cups 38b is adapted to be mounted on the ends of a second opposed pair of the trunnions 40b in a similar manner. The second pair of bearing cups 38b are adapted to be connected to a conventional yoke (not shown) or other structure to connect the journal cross 42 to another component of a driveshaft assembly.

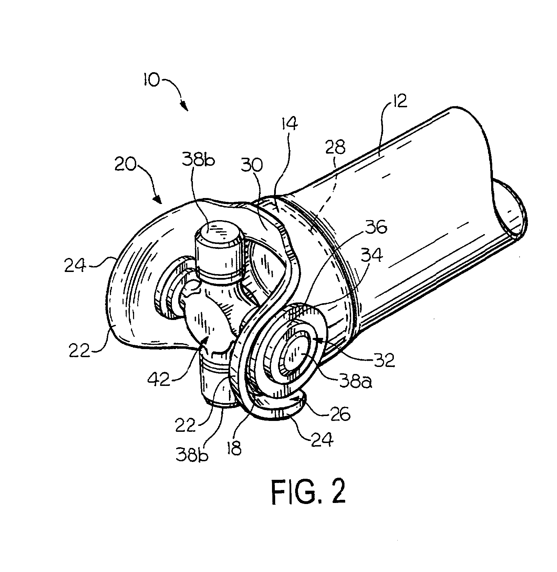

The driveshaft assembly 10 is assembled as illustrated in Figs. 2 through 4. The driveshaft assembly 10 is assembled by initially inserting the opposing arms 16 of the driveshaft tube 12 into the recesses 26 cooperatively defined by the reinforcement arms 22 and the peripheral lips 24 of the journal cross carrier 20. In doing this, the cup-shaped portion 28 of the journal cross carrier 20 is received within the enlarged end 14 of the driveshaft tube 12. The annular reinforcement members 32 are then inserted into the respective openings 16a and 22a. The reinforcement arms 22 of the journal cross carrier 20 are preferably sized to fit snugly between the opposing arms 16 of the driveshaft tube 12. Moreover, the cup-shaped portion 28 is preferably sized to fit snugly within the enlarged end 14 of the driveshaft tube 12.

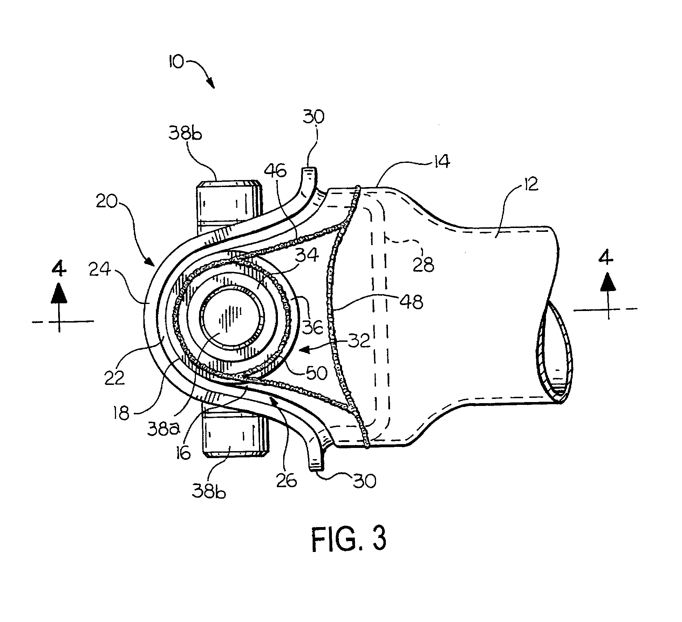

As shown in Fig. 3, the opposing arms 16 of the driveshaft tube 12 and the reinforcement arms 22 of the journal cross carrier 20 are secured together using conventional welding processes (laser or metal inert gas (MIG) welding, for example, such as shown at the perimeter weld 46) or other techniques that are suited for joining components formed from similar materials. The cup-shaped portion 28 and the enlarged end 14 of the driveshaft tube 12 are also secured together using conventional welding processes (laser or metal inert gas (MIG) welding, for example, such as shown at the circumferential weld 48) or other techniques that are suited for joining components formed from similar materials. Moreover, the opposing arms 16 of the driveshaft tube 12 and the circular flange 36 of the annular reinforcement members 32 are secured together using conventional welding processes (laser or metal inert gas (MIG) welding, for example, such as shown at the circular weld 50) or other techniques that are suited for joining components formed from similar materials. Although not shown, the welds 46, 48, and 50 can be generally sinusoidal in shape, or some other shape, such as a sawtooth or square tooth shape.

Next, the journal cross 42 is inserted within the journal cross carrier 20 with the cylindrical sleeves 34 of the annular reinforcement members 32 received about the first pair of trunnions 40a. The inner diameters defined by the openings 34a in the cylindrical sleeves 34 of the annular reinforcement members 32 are somewhat larger than the outer diameters of the trunnions 40a. Thus, the cylindrical sleeves 34 are received about the trunnions 40a with play. Next, the bearing cups 38a are inserted between the cylindrical sleeves 34 and the trunnions 40a. As mentioned above, the bearing cups 38a are preferably sized to fit snugly within the cylindrical sleeves 34. Thus, a conventional press or other assembly tool may be employed to insert the bearing cups 38a within the cylindrical sleeves 34.

The driveshaft assembly 10 is assembled in Fig. 4. As shown therein, the bearing cups 38a are frictionally retained in the cylindrical sleeves 34 of the annular reinforcement members 32, and the annular reinforcement members 32 are frictionally retained within the arms 16 and arms 22. However, it will be appreciated that such frictional engagements are not required. If desired, additional retaining structures (not shown) may be provided to positively retain the bearing cups 38a within the cylindrical sleeves 34 of the annular reinforcement members 32. The journal cross 42, however, is free to rotate a limited distance relative to the bearing cups 38a, the cylindrical sleeves 34 of the annular reinforcement members 32, and the journal cross carrier 20.

It should be appreciated by one of ordinary skill in the art of the invention that any appropriate materials may be used for both the driveshaft tube 12 and the other components of the driveshaft assembly 10. The use of steel, aluminum, magnesium, and alloys of these materials, as well as composite materials, are all within the scope of the invention. Of course, none of the materials need be used exclusively, and their combination is specifically included.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A driveshaft assembly comprising:
a driveshaft tube including an end having first and second arms extending therefrom; and
a journal cross carrier secured to said end of said driveshaft tube, said journal cross carrier including a closed body portion having first and second arms extending therefrom, said closed body portion extending within said end of said driveshaft tube, said first and second arms of said journal cross carrier arms respectively engaging said first and second arms of said driveshaft tube.

2. The driveshaft assembly defined in Claim 1 wherein said first and second arms of said driveshaft tube are formed integrally with said driveshaft tube.

3. The driveshaft assembly defined in Claim 1 wherein said first and second arms of said journal cross carrier are formed integrally with said closed body portion.

4. The driveshaft assembly defined in Claim 1 wherein said first and second arms of said driveshaft tube have respective first and second openings formed therethrough, and wherein said first and second arms of said journal cross carrier have respective first and second openings formed therethrough, said first openings and said second openings being aligned with one another.

5. The driveshaft assembly defined in Claim 4 further including a journal cross including first and second trunnions that are supported in said aligned first and second openings.

6. The driveshaft assembly defined in Claim 5 further including a first and second annular members, said first annular member being disposed in said aligned first openings and supporting said first trunnion of said journal cross, said second annular member being disposed in said aligned second openings and supporting said second trunnion of said journal cross.

7. The driveshaft assembly defined in Claim 6 further including first and second bearing cups, said first bearing cup being disposed within said first annular member and supporting said first trunnion, said second bearing cup being disposed within said second annular member and supporting said second trunnion.

8. The driveshaft assembly defined in Claim 8 wherein each of said annular reinforcement members includes a hollow sleeve portion having a flange portion extending outwardly therefrom.

9. The driveshaft assembly defined in Claim 10 wherein hollow sleeve portions are disposed in said aligned first and second openings, and wherein said flange portions are secured to said first and second arms of said journal cross carrier.

10. The driveshaft assembly defined in Claim 1 wherein said closed body portion is press fit within said end of said driveshaft tube.
